# EUROPEAN PATENT SPECIFICATION

(11) **EP 3 404 545 B1**
(45) Date of publication and mention of the grant of the patent: **07.07.2021**
(21) Application number: 17171950.3
(22) Date of filing: 19.05.2017
(51) Int. Cl.: G06F 11/07

(54) **HANDHELD LOGGING APPARATUS**
TRAGBARE PROTOKOLLIERUNGSVORRICHTUNG
APPAREIL D'ENREGISTREMENT PORTABLE

(43) Date of publication of application: 21.11.2018
(73) Proprietor: Bayerische Motoren Werke Aktiengesellschaft, 80809 München (DE)
(72) Inventor: Bhakta, Ankur, Sunnyvale, CA California 94086 (US); Gallese, Sebastian, San Francisco, CA California 94103 (US); Gruber, Jakob, 93354 Niederumelsdorf (DE)

(56) References cited:
- EP-A1- 2 782 071
- US-A1- 2011 191 394
- US-B1- 6 181 992

## Description

### FIELD OF THE INVENTION

The present invention relates to the field of logging of applications running on a portable electronic device, particularly on a portable electronic communication or other consumer device such as a smart phone or tablet computer. Specifically, the invention is directed to a handheld logging apparatus for capturing a log file of a compatible portable electronic device.

### BACKGROUND

Many of today's mobile electronic devices, such as smart phones and tablet computers for example, feature a large set of different applications, which may either be preinstalled by the manufacturer or network operator or may be loaded to the device by the user through specific "stores" for applications on the Internet, such as the "App Store" by Apple, Inc. or the "Google Play"-Store by Google, Inc.

As many of these applications are rather complex programs, developing such applications typically involves a lot of testing, before the applications can be published and distributed. A common tool used by many software developers is a so-called "logger" or "logging application", which is a program that allows the creation and keeping of so-called "log files or "logs", i.e. files, that record events that occur in an operating system or during other software runs, such as the tested application, and/or messages between different users of a communication software. Particularly, in its simplest form, the logger creates and/or keeps a single log file. Specifically, the logged events may refer to errors that occurred during the software run of the tested application.

One way of keeping such logs is running on the mobile device itself a logging application which comprises a man/machine-interface that allows a user, such as a software developer, to gain access to the log file created by the logging application or a tested application itself after the test is completed. However, while earlier versions of some prominent mobile operating systems (OS) supported such logging applications, for example the "ALogCat" and "catLog" apps available on the Google Play Store for the well-known Android® operating system for mobile platforms, security concerns have triggered some OS suppliers to introduce additional security measures with respect to accessing log files. Accordingly, in some mobile operating systems, such as Android after its version 5.0, the logs cannot be taken and accessed by the tested mobile communication (unrooted) device itself, but instead (for Android because of a change to the Android OS security model in newer versions of this OS) an additional computer, such as an external PC running a specific program, is needed to take logs from the electronic device. Consequently, engineers performing a field test of an application on a mobile electronic device, such as a smart phone, do now generally need a portable computer to take the device logs of the electronic device or need to take the device back after testing to a place, e.g. a lab, that is equipped with a suitable computer.

Furthermore, typically the device logs are only available on the device itself for a limited period of time, such as a few hours. Frequently, the reason for this is that a ring memory is used to store the log, such that after a certain amount of data has been stored in the log file, the ring memory is exhausted and thus additional data written into the log file will overwrite pre-existing data.

In some occasions, the above problems can be overcome by breaking access limitations imposed by the OS or carriers and hardware manufacturers. In particular, in the case of Android®, breaking such limitations is known as "rooting", which is the process of allowing users of smartphones, tablets and other devices running the Android mobile operating system to attain privileged control (known as root access) over various Android subsystems. Thus, rooting may provide the ability (or permission) to alter or replace system applications and settings, run specialized applications ("apps") that require administrator-level permissions, or perform other operations that are otherwise inaccessible to a normal Android user. However, the rooting process is non-trivial, and rooting respectively breaking access limitation of a mobile device can void device warranties or even be illegal and may cause other issues such as instabilities or increased vulnerability to certain threats, such as computer viruses.

EP 2 782 071 A1 discloses a vehicle-onboard apparatus system, which comprises a portable terminal and a vehicle-onboard machine that are configured to be coupled to each other for communication. The portable terminal and the vehicle-onboard machine each store operation logs including operation contents thereof. When an operation of the vehicle-onboard machine and an operation of the portable terminal relate to each other, an operation log resulting from the operation of the vehicle-onboard machine and an operation log resulting from the operation of the portable terminal are associated with each other by first identification information. The vehicle-onboard machine makes a user to recognize the first identification information corresponding to an operation causing detected predetermined state. When the portable terminal receives an input of the first identification information presented by the vehicle-onboard machine, the portable terminal acquires the operation log associated with the input first identification information. The portable terminal analyzes the acquired operation log.

### SUMMARY OF THE INVENTION

Therefore, it is an object of the present invention to provide an improved solution for logging applications running on mobile devices, which addresses at least some of the disadvantages listed above.

A solution to this problem is provided by the teaching of the independent claim, specifically by a handheld logging apparatus according to claim 1. Various preferred embodiments of the present invention are provided by the teachings of the dependent claims.

A first aspect of the invention is directed to a handheld logging apparatus for capturing a log file of a compatible portable electronic device, preferably of a device running a version of the Android® operating system, the logging apparatus comprising: (a) a processing unit; (b) an interface adapted to communicatively connect the logging apparatus to the electronic device; and (c) a trigger device being communicatively coupled to the processing unit, being operable by a human user, and being configured to send a trigger signal to the processing unit upon it being operated by a human user. The processing unit is configured to: (i) send, upon receiving the trigger signal, a request signal to the electronic device via the interface to request the electronic device to provide the logging apparatus with access to an internal log file of the electronic device; (ii) read data from the log file via the interface when the electronic device has granted access to the log file; and (iii) store the data read from the log file, at least in parts, to a memory device and/or to send it, at least in parts, to a recipient device over a communication link.

The term "logging apparatus" in the sense of the present invention refers to an apparatus that is, unlike a general-purpose computer (e.g. a PC), specifically designed and adapted to capture and provide a log file of a compatible portable electronic device. Preferably, such capturing and providing of log files is the main or even the only functionality of the logging apparatus. Accordingly, a general-purpose computer, such as a desktop or portable personal computer is not a logging apparatus in the sense of the present invention, even if a logging software is installed on such a computer.

A "handheld" device in the sense of the present invention is a portable electronic device that can be operated without an external power supply (and is thus usually powered by a battery) and has a form factor and a weight which are so small, that the device can be and is designed to be handled and operated by the user with just one hand. Accordingly, handheld devices form a subgroup of the group of mobile devices. By way of example and without limitation, PDAs, and mobile phones such as smart phones typically qualify as handheld devices, while computers having a tablet, laptop, notebook or desktop form factor do not, as typically two hands or a hand and another part of the body, such a user's "lap" (hence "laptop"), or a body-external support such as a desk is necessary to properly or at least conveniently operate such devices.

The term "trigger device" in the sense of the present invention refers to a device that forms a part of the logging apparatus and is adapted to be operated by a user of the logging apparatus. Upon its operation by the user it initiates an output of a trigger signal by itself or another device connected to it. By way of example and without limitation, a simple push button configured to initiate such a trigger signal upon being pushed is a trigger device in the sense of the present invention. Other, more complex devices, e.g. devices comprising one or more sensors for sensing a user input and causing the output of a trigger signal based thereon, e.g. a touch sensor or a voice recognition device, may similarly qualify as a trigger device according to the present invention.

The processing unit may comprise one or more processors (CPUs or CPU cores) and the interface may be particularly wire-bound, wireless or optical. Preferably, the interface is based on one or more of the following known communication technologies: Bluetooth, Wireless LAN, (WIFI), Universal Serial Bus (USB), Near Field Communication (NFC).

Due to its small form factor and low weight, the handheld logging apparatus according to the present invention can be easily transported along with the (first) electronic device to be logged, particularly for the performance of field testing of applications running on the electronic device. Furthermore, as the logging apparatus can immediately capture log files created or maintained on the (first) electronic device (also referred to as "logged device") and store or otherwise save them, the logging results written to the log file remain available, even if the log file is erased or modified thereafter on the logged device, particularly in case of overwriting of previously stored data, e.g. if a ring memory is used in the logged device to store the log file. The stored or otherwise saved log file(s) can then later be provided to a computer for analysis, while said computer does not have to be carried along during the field test. Furthermore, the logged device does not have to be rooted or otherwise compromised in order to capture its log file(s). In addition, the trigger device enables a quick and easy activation of a logging sequence, preferably by a single user input such as a push of a button, which is particularly efficient and convenient in situations, where the log file does not have to be recorded continuously, but instead only specifically upon the occurrence of specific events or situations, such as an erroneous execution of the tested application under certain circumstances.

In the following, preferred embodiments of the logging apparatus are described, which can be arbitrarily combined with each other or with other aspects of the present invention, unless such combination is explicitly excluded or technically impossible.
According to a preferred embodiment, the trigger device is adapted to be operated by a single, particularly one-dimensional, interaction of the human user with the trigger device. Herein, a "single" interaction refers to an uninterrupted single-step interaction of the user with the trigger device, particularly with an input element thereof, and a "one dimensional interaction" refers to an interaction, wherein the user performs a translatory or rotary motion with respect to the trigger device, such as for example a linear push or pull, or a rotation about a given axis or a pivot point of an input element of the trigger device. According to this embodiment, a quick and reliable interaction of the user with the logging apparatus is enabled and the cognitive burden of the user for operating the device is minimized. Thus, timing issues with respect to the triggering of the logging and capturing of time critical events during the test process as well as errors caused by a wrong operation of the logging apparatus by the user can be effectively avoided.

Specifically, in one preferred related embodiment the trigger device comprises a switch the operation of which by the human user causes the trigger signal to be sent. Preferably, the switch is of the push type or toggle type or comprises a touch sensitive surface which when touched by the user initiates a switching operation of the switch.

According to a further preferred embodiment, the trigger device is further adapted to automatically send the trigger signal upon detection of an occurrence of a predefined event. To that purpose, the logging apparatus may particularly comprise one or more sensors configured to detect the occurrence of such predefined events. Each of these sensors may either be communicatively linked to the trigger device or form a part thereof. For example, at least one sensor might be configured to detect an increase of the power consumption of the electronic device beyond a predefined threshold that might be indicative of the occurrence of an error in the run of the tested application, or one or more sensors may be configured to detect one or more predefined specific signals received from the electronic device, e.g. wirelessly or via a cable connection. In this way, in certain situations, the triggering may be performed even faster and automatically, as compared to a user triggered approach. Furthermore, the sensitivity of the sensors for the occurrence of a predefined event that should cause a triggering of the logging might be higher than that of a human user observing the test by his senses. This embodiment is also particularly useful, if the user is not in a situation, where he can entirely focus on the observance of the test, but instead he has to perform other tasks, such as driving a car or other vehicle during a field test that involves testing the to-be-tested application or other software while the electronic device is substantially moving, esp. in an automotive context. Nevertheless, the operability of the trigger device by the user still remains available to cover situations, where a trigger signal is to be initiated independent from the user-independent detection of an event or if the latter fails.

According to a preferred related embodiment, the predefined event comprises receiving a signal, particularly from the electronic device, the signal indicating that data in the log file of the electronic device is about to be erased or overwritten. In this way, the capturing and securing of the log file(s) of the logged electronic device is automatically triggered before logging data is lost due to the upcoming erasure or overwriting operation. As described above, this embodiment may be particularly useful in scenarios, where the electronic device's memory storing the log file is a ring memory or is otherwise operated in a way that involves a regular erasure or overwriting of stored logging data.

According to a further preferred embodiment, the logging apparatus further comprises a power input, preferably involving a Universal Serial Bus (USB) connector or another standardized connector type, for connection to an external power supply, such as a USB socket or a cigar lighter socket in an automobile, a power bank, or a solar panel. In this way, the continuous operation or recharging of the logging apparatus during a software test cycle can be secured, even if the logging apparatus' own power supply, e.g. battery, is running low. The latter may be the case particularly during long-term test cycles or in test cases that involve a particularly high logging activity and/or a frequent storage of captured log files and/or their frequent transmission to a recipient device, such as a server.

According to a further preferred embodiment, the logging apparatus comprises a single-board computer that includes the processing unit. A specific well-known example of such a single-board computer is the Raspberry PI by the Raspberry PI Foundation. A particular advantage of such single board computers is their small form factor, which enables the design and manufacturing of logging apparatus' having the desired small form factor of a handheld device. In addition, such single-board computers are typically more power optimized than other computers, esp. PCs, and are thus specifically suitable for being battery-powered.

According to a further preferred embodiment, the processing unit is further configured to send the data read from the log file back to the electronic device via the interface, at least in parts, and a storage signal adapted to cause the electronic device to store the read data independent from the original log file from which the data was read before. In this way, on the one hand the own storage of the electronic device can be used to store and save the captured logging data and on the other hand, due to the separation of this data from the original log file, the stored logging data can be protected from being erased or overwritten, even if the original log file is subject to frequent erasure or overwriting cycles, e.g. if it is stored in a memory portion operated as a ring memory.

According to a further preferred embodiment, the processing unit is further configured to selectively read only such data from the log file that was written or caused to be written to the log file by one or more pre-selected applications among the applications being available on the electronic device or by system level software, such as an operating system, of the electronic device. In this way, the capturing of logging data from the log file can be performed selectively, particularly so as to capture only logging data of particular interest, such as logging data pertaining to a specific tested application installed on the electronic device and/or to the operating system itself. Furthermore, this can be used to keep the amount of captured logging data low, particularly as low as possible for a given test objective, because capturing and storing or sending away of uncritical additional logging data can be effectively minimized or even avoided. This may also lead to less power consumption of the logging apparatus and or the logged device and thus longer battery lifetime(s).

According to a further preferred embodiment, the processing unit is further configured to send, upon receiving the trigger signal, a request signal to the electronic device via the interface to request the electronic device to provide the logging apparatus with access to a selected one of a plurality of internal log files of the electronic device. In this way, in a scenario where the electronic device maintains a plurality of log files, a subset of one or more of those log files can be selected as source file(s) for capturing the logging data, while the other one or more of the log files are not selected. This may be particularly useful, if only certain kinds of logging data are of interest, or if a dedicated log file is maintained for each application to be tested, such that this embodiment can be used to particularly select only logging data pertaining to that specific applications for being captured.

According to a further related preferred embodiment, the processing unit is configured to send the data read from the log file, at least in parts, over a communication link being connected to the Internet to a recipient device. This enables a storage or further processing of the logging data on a different device than the logging apparatus itself or the electronic device, e.g. on a computer or server connected to the Internet. In particular, this embodiment may advantageously support abiding by security measures introduced into mobile operating systems which would otherwise not allow similar access to the desired log file(s). Furthermore, this embodiment may be particularly helpful, if the logging data shall already be analyzed while the field test is still ongoing, and even if further logging data is still being captured. For example, a first test engineer might be performing the field test carrying the electronic device and the logging apparatus with him, e.g. in a car driving across the country, while after receiving the logging data via the Internet at the recipient device in a lab, a second test engineer can already start to evaluate the logging data and may even derive therefrom and provide back to the first field engineer further guidance for the further conducting of the field test, e.g. test parameters or test cases to be implemented during the ongoing test.

Specifically, according to a further related preferred embodiment, the processing unit is further configured to send the logging data read from the log file, at least in parts, via Email or another Internet-based message service over the communication link to the recipient device. This allows for an efficient reuse of typically already established and robust communication channels for sending the logging data without a need for establishing additional communication channels.

According to a further related preferred embodiment, the processing unit is further configured to establish the communication link via a tethering connection between the logging apparatus and the electronic device. In this way, an existing communication capability of the logged electronic device itself, in particular based on the ubiquitous cellular mobile communication technology, can be used to establish said communication link. Thus, the logging apparatus itself only needs to be adapted to communicate with the electronic device, i.e. by short range communication, while the communication link to the recipient device, which is typically a long-range communication link, is enabled and provided by the electronic device.

### BRIEF DESCRIPTION OF THE DRAWINGS

Further advantages, features and applications of the present invention are provided in the following detailed description and the appended figure, wherein:

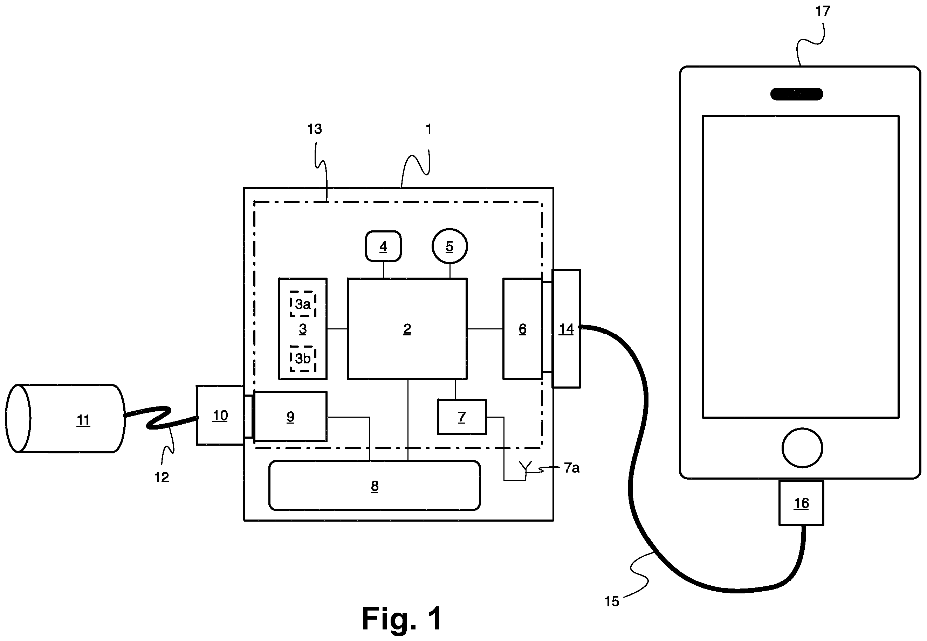

**Fig. 1** schematically illustrates a test arrangement comprising a handheld logging apparatus according to a preferred embodiment of the present invention and a portable electronic device to be logged.

### DETAILED DESCRIPTION OF PREFERRED EMBODIMENTS

The test arrangement illustrated in Fig. 1 comprises a handheld logging apparatus 1 according to a preferred embodiment of the present invention. The logging apparatus 1 is communicatively connected to a portable electronic device, e.g. a smart phone featuring an android operating system, via a communication cable 15 that is connected to the logging apparatus 1 via a first connector 14 plugging into an interfaced socket 6 of the logging apparatus 1 at one end and a second connector 16 plugged into an interface socket of the electronic device 17 in order to establish a communication link between the two devices. In addition, or instead, the logging apparatus 1 may comprise communication means for establishing other communication links between the logging apparatus 1 and the electronic device 17. In particular, the logging apparatus 1 may comprise wireless interfaces according to the Wi-Fi or Bluetooth or other short range communication technologies in order to use wireless communication to exchange data with the electronic device 17.

The logging apparatus 1 comprises a single-board computer 13, e.g. a "Raspberry Pi" single-board computer by the Raspberry Pi foundation and a battery 8 as a corresponding power supply. Instead or in addition (as shown), the logging apparatus 1 may comprise a power input 9 for connecting the logging apparatus 1 to an external power source (not shown), such as a power socket of a vehicle or an external battery. In the illustrated example, a power line 12 is provided that is connectable to the power input 9 via a first connector 10 at one end and to such external power source, particularly a cigar lighter socket of a car, via a corresponding second connector 11 at its other end, which is configured to connect to a cigar lighter socket.

The single-board computer 13 comprises a processing unit 2 which may be a single core or a multi-core processor unit, at least one memory 3 of a read/write type, such as random access memory (RAM) or flash memory, that is communicatively coupled to the processing unit 2 in order to allow the processing unit 2 to read and write data from/to the memory 3. The memory may serve as both a program memory 3a for a computer program for controlling and determining the functionality of the logging apparatus 1 and data memory 3b, the latter in particular for storing logging data read from an internal log file of the electronic device 17.

Furthermore, the logging apparatus 1 comprises a trigger device 4 comprising a switch, preferably of the pushbutton or toggle switch type, and which is configured to be operated by a human user such as a test engineer using the test arrangement of Fig. 1 for testing an application running on the electronic device 17. The trigger device 4 is adapted to be operated by the user through a single interaction, such as a push respectively turn of the switch.

The trigger device is additionally adapted to monitor predefined operational parameters of the logging apparatus 1, such as its current power consumption, temperature, supply current, CPU and/or memory load etc.. If, as a result of such monitoring, the trigger device recognizes a situation, that according to one or more predefined criteria, such parameter value exceeding a corresponding (e.g. power or temperature) threshold, might be indicative of an issue in the run of the application on the logged electronic device 17, it also causes a trigger signal to be sent to the processing unit 2, similar to that caused by operating the trigger device 4 by a user. To that purpose, the trigger device 4 may particularly comprise at least one sensor that is configured to detect an increase of the power consumption of the electronic device beyond a predefined threshold that might be indicative of the occurrence of an error in the run of the tested application, or one or more sensors configured to detect one or more predefined specific signals received from the electronic device, e.g. wirelessly or via the cable 15. Particularly, such specific signal may be a signal indicating that logging data in the logged electronic device's log file is about to be erased or overwritten. In this way, the triggering may be performed automatically and at least in some scenarios, that can be automatically detected, even faster and more reliably than with the user-triggered approach.

In addition, the logging apparatus 1 may comprise a signaling component 5, e.g. of the optical type such as lamp or a light-emitting diode (LED), or an acoustic type, such as a loudspeaker. The singling component can be configured to provide a signal to the user, indicating when the logging apparatus 1 is active and/or when it is in a specific operation mode, such as a capturing mode where it is reading logging data from a log file of the electronic device 17.

Furthermore, the logging apparatus 1 may comprise at least one communication unit 7, e.g. a wireless transceiver connected to a corresponding antenna 7a. Preferably, the communication unit 7 is configured for connecting the logging apparatus 1 to the Internet via a cellular communication network, such as a 3G or LTE network, or a wireless LAN network, e.g. a WIFI hotspot. Furthermore, the communication unit 7 may be adapted to establish a - preferably short-range - wireless communication link to the electronic device 17, instead or in addition to the connection via the cable 15, as already described above. Particularly, the logging apparatus 1 may be configured to use one or more of these communication links to the electronic device 17 to connect to the Internet by way of tethering, thereby using an Internet connection of the electronic device 17. For example, the logging apparatus 1 may use a Bluetooth link to the electronic device 17 and a cellular communication link of the electronic device 17 to the Internet in order to establish itself a connection to the Internet, wherein the electronic device 17 serves as a tethering device, i.e. an intermediate network node and gateway.

Now, the operation of the logging apparatus 1 in the test arrangement shown in Fig. 1 is discussed. Upon operation of the trigger device 4, e.g. the switch in the above example, a trigger signal is caused to be sent to the processing unit 2, e.g. by closing or a respective signaling circuit through the switch. Similarly, the trigger signal can be initiated by the trigger device upon detection of a qualified event, as described above. The processing unit 2 is configured to send, upon receiving the trigger signal, a request signal to the electronic device 17 via the interface 6 and communication cable 15 to request the electronic device 17 to provide the logging apparatus 1, in particular its processing unit 2, with access to an internal log file of the electronic device 17.

On the electronic device 17, all internal log files are transferable via the communication link 15 established between the logging apparatus 1 and the electronic device 17. Optionally, a logging application may be run that is configured to create, maintain and update at least one internal log file and provide access to it via the communication link 15 established between the logging apparatus 1 and the electronic device 17. Exemplary currently available logging applications are the "ALogCat" and "catLog" apps available on the Google Play Store for the Android® operating system.

The logging apparatus 1 captures, i.e. reads, logging data via the communication link 15 from the log file, preferably continuously or in regular intervals. A number of different options are available for storing the read logging data. According to a first option, the logging data is stored in the memory 3 of the logging apparatus 1, preferably in a memory portion 3b dedicated to that purpose.

Instead or in addition, the logging apparatus 1 may forward (e.g. by email or another messaging or data transfer technology) the read logging data, in whole or in part, to a recipient device such as an Internet server or another device such as a Personal Computer connected to the Internet via one or more communication channels established via the communication unit 7, or, if the recipient device is the electronic device 17 itself, via the established communication link provided by the cable 15 or a short range wireless connection to the electronic device 17, as described above. In the latter case, the logging data may be complemented by a storage signal that is configured to cause the electronic device 17 to store the logging data received from the logging apparatus 1 independent from the original internal log file, e.g. to a memory or memory portion that is safeguarded against erasure or overwriting operations performed with respect to the original log file.

The processing unit 2 may particularly be configured to selectively read only such data from the log file of the electronic device 17 that pertains to a particular application (other than the logging application mentioned above) running on the electronic device 17. Instead or in addition, specifically logging data pertaining to the system of the electronic device, in particular system-level software such as its operating system, is read. For example, if the test is focused on testing the behavior of a particular application loaded on the electronic device 17, it might be useful to focus the selection of logging data for capturing by the logging apparatus 1 to such elements of the log file that pertain to that very application and optionally also to the operating system, while logging data pertaining to other applications will not be captured. This can be used to keep the complexity low and limit the amount of data transfer and storage to perform the test analysis based on the captured logging data.

In addition, or instead, the processing unit may be configured to inform the electronic device 17, in particular the logging application running on the electronic device 17, to provide only access to one or more specific ones out of a plurality of internal log files being kept. Particularly, this may be helpful, if different applications use different log files or if the system-level log file is separated from application-specific log files.

Once the desired logging data is captured and stored in the memory of the logging apparatus 1 or forwarded to a suitable recipient device, the actual analysis of the logging data may be performed. For example, in a preferred use case, the logging data is continuously captured by the logging apparatus 1 and forwarded to a remote recipient device, (e.g. a PC running a software development kit (SDK) including a debugger) via the Internet, such that the analysis of the captured logging data can already start while the capturing of loading data is still ongoing. As the logging data is captured and stored/forwarded before it might be erased or overwritten within the electronic device 17, the analysis of the logging data is no longer depending on the availability period of the log file on the electronic device itself. The logging apparatus 1 has a very small form factor comparable to or even smaller than that of the logged electronic device 17 itself and thus ease of use and the mobility is increased over today's logging arrangements that require either a rooting (or otherwise breaking) of the electronic device to be logged or its connection to a larger general purpose computer, such as a PC, running a full SDK including a toolkit for getting access to the log files. For example, in the case of electronic devices running the Android operating system, such access is enabled via the Android Debug Bridge (ADB) being only a part of the Android SDK. In contrast, the logging apparatus 1 of the present invention needs to be adapted to use and store ADB and run a slim software program or set of programs to capture the log files. Furthermore, the solution according to the present invention no longer suffers from limited and only temporary availability of the desired log file(s) on the electronic device to be logged itself.

While above at least one exemplary embodiment of the present invention has been described, it has to be noted that a great number of variation thereto exists. Furthermore, it is appreciated that the described exemplary embodiments only illustrate nonlimiting examples of how the present invention can be implemented and that it is not intended to limit the scope, the application or the configuration of the herein-described apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 1: Handheld logging apparatus
- 2: processing unit
- 3: memory
- 3a: program memory
- 3b: data memory, esp. for storing logging data
- 4: trigger device
- 5: signaling component, e.g. LED
- 6: interface to electronic device to be logged
- 7: communication unit, e.g. wireless transceiver
- 7a: antenna
- 8: battery
- 9: power input, e.g. power socket
- 10: connector of power line to logging apparatus
- 11: connector to cigar lighter
- 12: power line
- 13: single-board computer
- 14: first connector of communication cable
- 15: communication link, e.g. cable
- 16: second connector of communication cable
- 17: portable electronic device to be logged

## Claims

1. Handheld logging apparatus (1) for capturing a log file of a compatible portable electronic device (17), preferably of a device running a version of the Android® operating system, the logging apparatus (1) comprising:
a processing unit (2);
an interface (6) adapted to communicatively connect the logging apparatus (1) to the electronic device (17); and
a trigger device (4) being communicatively coupled to the processing unit (2), being operable by a human user, and being configured to send a trigger signal to the processing unit (2) upon it being operated by a human user;
wherein the processing unit (2) is configured to:
- send, upon receiving the trigger signal, a request signal to the electronic device (17) via the interface (6) to request the electronic device (17) to provide the logging apparatus (1) with access to an internal log file of the electronic device (17);
- read data from the log file via the interface (6) when the electronic device (17) has granted access to the log file; and
- store the data read from the log file, at least in parts, to a memory device (3) and/or to send it, at least in parts, to a recipient device over a communication link;
the logging apparatus is **characterized in that**:
the trigger device (4) is further adapted to automatically send the trigger signal upon monitoring predefined operational parameters of the electronic device (17) and determining that a value of the monitored predefined operational parameters exceeds a corresponding threshold.

2. The logging apparatus (1) of claim 1, wherein the trigger device (4) is adapted to be operated by a single interaction of the human user with the trigger device (4).

3. The logging apparatus (1) of claim 2, wherein the trigger device (4) comprises a switch the operation of which by the human user causes the trigger signal to be sent.

4. The logging apparatus (1) of any one of the preceding claims, wherein the trigger device (4) is further adapted to automatically send the trigger signal upon detection of an occurrence of a predefined event.

5. The logging apparatus (1) of claim 4, wherein the predefined event comprises receiving a signal indicating that data in the log file of the electronic device (17) is about to be erased or overwritten.

6. The logging apparatus (1) of any one of the preceding claims, further comprising a power input (9) for connection to an external power supply.

7. The logging apparatus (1) of any one of the preceding claims, comprising a single-board computer (13) that includes the processing unit (2).

8. The logging apparatus (1) of any one of the preceding claims, wherein the processing unit (2) is further configured to send the data read from the log file back to the electronic device (17) via the interface (6), at least in parts, and a storage signal adapted to cause the electronic device (17) to store the read data independent from the original log file from which the data was read before.

9. The logging apparatus (1) of any one of the preceding claims, wherein the processing unit (2) is further configured to selectively read only such data from the log file that was written or caused to be written to the log file by one or more pre-selected applications among the applications being available on the electronic device (17) or by system level software of the electronic device (17).

10. The logging apparatus (1) of any one of the preceding claims, wherein the processing unit (2) is further configured to send, upon receiving the trigger signal, a request signal to the electronic device (17) via the interface (6) to request the electronic device (17) to provide the logging apparatus (1) with access to a selected one of a plurality of internal log files of the electronic device.

11. The logging apparatus (1) of any one of the preceding claims, wherein the processing unit (2) is further configured to send the data read from the log file, at least in parts, over a communication link being connected to the Internet to a recipient device.

12. The logging apparatus (1) of claim 11, wherein the processing unit (2) is further configured to send the logging data read from the log file, at least in parts, via Email or another Internet-based message service over the communication link to the recipient device.

13. The logging apparatus (1) of claim 11 or 12, wherein the processing unit (2) is further configured to establish the communication link via a tethering connection (15) between the logging apparatus (1) and the electronic device (17).

## Patentansprüche

1. Tragbare Protokolliervorrichtung (1) zum Aufnehmen einer Protokolldatei einer kompatiblen tragbaren elektronischen Vorrichtung (17), vorzugsweise einer Vorrichtung, die eine Version des Android®-Betriebssystems ausführt, wobei die Protokolliervorrichtung (1) Folgendes umfasst:
eine Verarbeitungseinheit (2);
eine Schnittstelle (6), die ausgelegt ist, die Protokolliervorrichtung (1) mit der elektronischen Vorrichtung (17) kommunikationstechnisch zu verbinden; und
eine Auslösevorrichtung (4), die an die Verarbeitungseinheit (2) kommunikationstechnisch gekoppelt ist, die durch einen menschlichen Anwender betreibbar ist, und die konfiguriert ist, ein Auslösesignal an die Verarbeitungseinheit (2) zu senden, wenn sie durch einen menschlichen Anwender bedient wird;
wobei die Verarbeitungseinheit (2) konfiguriert ist zum:
- Senden bei Empfang des Auslösesignals eines Anforderungssignals an die elektronische Vorrichtung (17) über die Schnittstelle (6), um die elektronische Vorrichtung (17) aufzufordern, der Protokolliervorrichtung (1) einen Zugriff auf eine interne Protokolldatei der elektronischen Vorrichtung (17) zu liefern;
- Lesen von Daten aus der Protokolldatei über die Schnittstelle (6), wenn die elektronische Vorrichtung (17) einen Zugriff auf die Protokolldatei gewährt hat; und
- Speichern der aus der Protokolldatei gelesenen Daten zumindest teilweise in einer Speichervorrichtung (2) und/oder Senden dieser Daten zumindest teilweise an eine Empfangsvorrichtung über eine Kommunikationsverbindung;
wobei die Protokolliervorrichtung **dadurch gekennzeichnet ist, dass**:
die Auslösevorrichtung (4) ferner ausgelegt ist, das Auslösesignal beim Überwachen im Voraus definierter Betriebsparameter der elektronischen Vorrichtung (17) und Bestimmen, dass ein Wert der überwachten im Voraus definierten Betriebsparameter einen entsprechenden Schwellenwert überschreitet, automatisch zu senden.

2. Protokolliervorrichtung (1) nach Anspruch 1, wobei die Auslösevorrichtung (4) ausgelegt ist, durch eine einzige Wechselwirkung des menschlichen Anwenders mit der Auslösevorrichtung (4) betrieben zu werden.

3. Protokolliervorrichtung (1) nach Anspruch 2, wobei die Auslösevorrichtung (4) einen Schalter umfasst, dessen Betätigung durch den menschlichen Anwender bewirkt, dass das Auslösesignal gesendet wird.

4. Protokolliervorrichtung (1) nach einem der vorhergehenden Ansprüche, wobei die Auslösevorrichtung (4) ferner ausgelegt ist, das Auslösesignal bei Detektion eines Auftretens eines im Voraus definierten Ereignisses automatisch zu senden.

5. Protokolliervorrichtung (1) nach Anspruch 4, wobei das im Voraus definierte Ereignis umfasst, ein Signal zu empfangen, das angibt, dass Daten in der Protokolldatei der elektronischen Vorrichtung (17) gerade gelöscht oder überschrieben werden.

6. Protokolliervorrichtung (1) nach einem der vorhergehenden Ansprüche, die ferner einen Leistungseingang (9) für eine Verbindung mit einer externen Stromversorgung umfasst.

7. Protokolliervorrichtung (1) nach einem der vorhergehenden Ansprüche, die einen Einzelboardcomputer (13) umfasst, der die Verarbeitungseinheit (2) enthält.

8. Protokolliervorrichtung (1) nach einem der vorhergehenden Ansprüche, wobei die Verarbeitungseinheit (2) ferner konfiguriert ist, die aus der Protokolldatei gelesenen Daten an die elektronische Vorrichtung (17) über die Schnittstelle (6) zumindest teilweise zurückzusenden, und ein Speichersignal, das ausgelegt ist, zu bewirken, dass die elektronische Vorrichtung (17) die gelesenen Daten unabhängig von der Originalprotokolldatei, aus der die Daten vorher gelesen wurden, speichert.

9. Protokolliervorrichtung (1) nach einem der vorhergehenden Ansprüche, wobei die Verarbeitungseinheit (2) ferner konfiguriert ist, wahlweise nur solche Daten aus der Protokolldatei zu lesen, die durch eine oder mehrere vorher ausgewählte Anwendungen unter den Anwendungen, die auf der elektronischen Vorrichtung (17) verfügbar sind, oder durch eine Systemniveau-Software der elektronischen Vorrichtung (17) in die Protokolldatei geschrieben wurden oder verursacht wurden, in die Protokolldatei geschrieben zu werden.

10. Protokolliervorrichtung (1) nach einem der vorhergehenden Ansprüche, wobei die Verarbeitungseinheit (2) ferner konfiguriert ist, bei Empfang des Auslösesignals ein Anforderungssignal an die elektronische Vorrichtung (17) über die Schnittstelle (6) zu senden, um die elektronische Vorrichtung (17) aufzufordern, der Protokolliervorrichtung (1) einen Zugriff auf eine ausgewählte von mehreren internen Protokolldateien der elektronischen Vorrichtung zu liefern.

11. Protokolliervorrichtung (1) nach einem der vorhergehenden Ansprüche, wobei die Verarbeitungseinheit (2) ferner konfiguriert ist, die aus der Protokolldatei gelesenen Daten zumindest teilweise über eine Kommunikationsverbindung, die mit dem Internet verbunden ist, an eine Empfangsvorrichtung zu senden.

12. Protokolliervorrichtung (1) nach Anspruch 11, wobei die Verarbeitungseinheit (2) ferner konfiguriert ist, die aus der Protokolldatei gelesenen Protokollierdaten zumindest teilweise über E-Mail oder einen anderen Internet-basierten Nachrichtendienst über die Kommunikationsverbindung an die Empfangsvorrichtung zu senden.

13. Protokolliervorrichtung (1) nach Anspruch 11 oder 12, wobei die Verarbeitungseinheit (2) ferner konfiguriert ist, die Kommunikationsverbindung über eine Anbindungsverbindung (15) zwischen der Protokolliervorrichtung (1) und der elektronischen Vorrichtung (17) einzurichten.

## Revendications

1. Appareil de journalisation (1) tenu à la main pour la capture d'un fichier-journal d'un dispositif électronique portable (17) compatible, de préférence d'un dispositif exécutant une version du système d'exploitation Android®, l'appareil de journalisation (1) comprenant :
une unité de traitement (2) ;
une interface (6) adaptée à connecter en communication l'appareil de journalisation (1) au dispositif électronique (17) ; et
un dispositif de déclenchement (4) étant couplé en communication à l'unité de traitement (2), étant actionnable par un utilisateur humain et étant configuré pour envoyer un signal de déclenchement à l'unité de traitement (2) lors de son actionnement par un utilisateur humain ;
l'unité de traitement (2) étant configurée pour :
- envoyer, lors de la réception du signal de déclenchement, un signal de demande au dispositif électronique (17), par le biais de l'interface (6), pour demander au dispositif électronique (17) d'accorder à l'appareil de journalisation (1) l'accès à un fichier-journal interne du dispositif électronique (17) ;
- lire des données dans le fichier-journal par le biais de l'interface (6) lorsque le dispositif électronique (17) a octroyé l'accès au fichier-journal ; et
- enregistrer les données lues dans le fichier-journal, au moins en partie, dans un dispositif de mémoire (3) et/ou les envoyer, au moins en partie, à un dispositif destinataire sur une liaison de communication ;
l'appareil de journalisation étant **caractérisé en ce que** :
le dispositif de déclenchement (4) est adapté en outre à envoyer automatiquement le signal de déclenchement lors de la surveillance de paramètres de fonctionnement prédéfinis du dispositif électronique (17) et de la détermination qu'une valeur des paramètres de fonctionnement prédéfinis surveillés dépasse un seuil correspondant.

2. Appareil de journalisation (1) selon la revendication 1, dans lequel le dispositif de déclenchement (4) est adapté à être actionné par une seule interaction de l'utilisateur humain avec le dispositif de déclenchement (4).

3. Appareil de journalisation (1) selon la revendication 2, dans lequel le dispositif de déclenchement (4) comprend un interrupteur dont l'actionnement par l'utilisateur humain provoque l'envoi du signal de déclenchement.

4. Appareil de journalisation (1) selon l'une quelconque des revendications précédentes, dans lequel le dispositif de déclenchement (4) est adapté en outre à envoyer automatiquement le signal de déclenchement lors de la détection d'une survenue d'un événement prédéfini.

5. Appareil de journalisation (1) selon la revendication 4, dans lequel l'événement prédéfini comprend la réception d'un signal indiquant que des données dans le fichier-journal du dispositif électronique (17) sont sur le point d'être effacées ou écrasées.

6. Appareil de journalisation (1) selon l'une quelconque des revendications précédentes, comprenant en outre une entrée d'alimentation (9) pour le raccordement à une source d'alimentation externe.

7. Appareil de journalisation (1) selon l'une quelconque des revendications précédentes, comprenant un ordinateur monocarte (13) qui comporte l'unité de traitement (2).

8. Appareil de journalisation (1) selon l'une quelconque des revendications précédentes, dans lequel l'unité de traitement (2) est configurée en outre pour renvoyer les données lues dans le fichier-journal au dispositif électronique (17) par le biais de l'interface (6), au moins en partie, et un signal d'enregistrement adapté à amener le dispositif électronique (17) à enregistrer les données lues indépendamment du fichier-journal d'origine dans lequel les données ont été lues auparavant.

9. Appareil de journalisation (1) selon l'une quelconque des revendications précédentes, dans lequel l'unité de traitement (2) est configurée en outre pour lire sélectivement dans le fichier-journal uniquement les données qui ont été écrites ou amenées à être écrites dans le fichier-journal par une ou plusieurs applications présélectionnées parmi les applications qui sont disponibles sur le dispositif électronique (17) ou par un logiciel de niveau système du dispositif électronique (17) .

10. Appareil de journalisation (1) selon l'une quelconque des revendications précédentes, dans lequel l'unité de traitement (2) est configurée en outre pour envoyer, lors de la réception du signal de déclenchement, un signal de demande au dispositif électronique (17) par le biais de l'interface (6) pour demander au dispositif électronique (17) d'accorder à l'appareil de journalisation (1) l'accès à un fichier-journal interne sélectionné d'une pluralité de fichiers-journaux internes du dispositif électronique.

11. Appareil de journalisation (1) selon l'une quelconque des revendications précédentes, dans lequel l'unité de traitement (2) est configurée en outre pour envoyer à un dispositif destinataire les données lues dans le fichier-journal, au moins en partie, sur une liaison de communication qui est connectée à Internet.

12. Appareil de journalisation (1) selon la revendication 11, dans lequel l'unité de traitement (2) est configurée en outre pour envoyer au dispositif destinataire les données de journalisation lues dans le fichier-journal, au moins en partie, par courrier électronique ou un autre service de messagerie par Internet, sur la liaison de communication.

13. Appareil de journalisation (1) selon la revendication 11 ou 12, dans lequel l'unité de traitement (2) est configurée en outre pour établir la liaison de communication par le biais d'une connexion partagée en mode modem (15) entre l'appareil de journalisation (1) et le dispositif électronique (17).
